# FASCICULE DE BREVET EUROPEEN

(11) **EP 2 366 247 B1**
(45) Date de publication et mention de la délivrance du brevet: **24.04.2013**
(21) Numéro de dépôt: 09801514.2
(22) Date de dépôt: 08.12.2009
(51) Int. Cl.: H04N 5/217, H04N 5/325, G06T 5/00

(54) **PROCÉDÉ DE TRAITEMENT POUR UN CAPTEUR SENSIBLE AU PHOTON UNIQUE ET DISPOSITIF EN FAISANT APPLICATION**
VERARBEITUNGSVERFAHREN FÜR EINEN SENSOR MIT EINZELPHOTONENEMPFINDLICHKEIT UND EINRICHTUNG DAMIT
PROCESSING METHOD FOR A SENSOR WITH SINGLE-PHOTON SENSITIVITY AND DEVICE USING SAME

(30) Priorité: 11.12.2008 FR 0858504
(43) Date de publication de la demande: 21.09.2011
(73) Titulaire: Université Claude Bernard Lyon I, 69622 Villieurbanne Cedex (FR); Centre National de la Recherche Scientifique, 75794 Paris Cedex 16 (FR)
(72) Inventeur: BARBIER, Rémi, F-69003 Lyon (FR); ESTRE, Nicolas, F-13540 Puyricard (FR)
(74) Mandataire: Thibault, Jean-Marc
(86) Numéro de dépôt international: PCT/FR2009/052455
(87) Numéro de publication internationale: WO 2010/067017

(56) Documents cités:
- US-A- 5 049 995
- US-A1- 2005 122 021
- US-B1- 6 999 116

## Description

Le domaine technique de l'invention concerne la détection de photons dans des scènes à bas niveaux de lumière.

Plus particulièrement, l'invention concerne le domaine des dispositifs de détection de photons comprenant un capteur doté d'une sensibilité de détection au photon unique ainsi que leurs procédés de mise en oeuvre.

L'invention trouve une application préférée mais non exclusivement dans le domaine du traitement des scènes de Vision Nocturne, par exemple dans les domaines de la défense et de la sécurité ou de l'imagerie scientifique et industrielle telle que la microscopie par fluorescence.

Dans l'état de la technique, il est connu d'utiliser à cet effet un capteur pixel silicium électro bombardé par une photocathode, habituellement appelé EBCMOS pour «Electro Bombarded Complementary Metal-Oxide Semiconductor ».

Le document WO 0106571 décrit un tel capteur, qui se compose d'une photocathode ainsi que d'une matrice de pixels en silicium. Ces deux composants sont scellés et forment une enceinte sous vide.

La photocathode convertit les photons émis par au moins une source de lumière en électrons primaires, par effet photoélectrique. Les électrons primaires sont accélérés en direction de la matrice de pixels par un champ électromagnétique qui leur confère suffisamment d'énergie cinétique pour qu'ils soient détectables individuellement.

La matrice de pixels comporte un volume de détection, disposé face à la photocathode et dans lequel pénètrent les électrons primaires accélérés. L'interaction des électrons primaires dans le volume de détection crée des charges qui diffusent jusqu'à des diodes disposées à pas régulier, par exemple matriciellement, et adaptées pour récolter les charges tout en optimisant le bruit de lecture. Le motif élémentaire de diode correspond à un pixel, et il est possible d'avoir plusieurs diodes par pixel.

L'accumulation des charges dans les diodes permet la création de signaux électriques traités de manière à générer un signal vidéo composé d'une succession d'images. Chaque image correspond à la somme des énergies déposées dans les pixels pendant un temps d'intégration du capteur.

Ce type de capteur a principalement été conçu pour une utilisation en scène de vision à faible niveau de lumière, par exemple en Vision Nocturne, avec des fréquences d'images de l'ordre de 25 Hz correspondant à un temps d'intégration de 40 ms.

Cependant, la matrice de pixels convertit également, de manière non souhaitée, des électrons ne provenant pas directement de la photocathode après conversion d'un photon. Cela génère des effets parasites sur l'image enregistrée par la matrice de pixels

Un premier type d'effet parasite est l'effet de halo. Il est dû à la rétrodiffusion des électrons primaires sur la matrice de pixels, de leur réaccélération en direction de la matrice de pixels puis de leur détection par celle-ci. En effet, l'image prend la somme des énergies déposées dans les pixels pendant le temps intégration du capteur, que cette énergie provienne d'électrons rétrodiffusés ou d'électrons primaires. Pour une scène à bas niveau de lumière, c'est-à-dire inférieure au mLux, et contenant une source plus intense localisée, il se produit une accumulation de charges dues aux électrons rétrodiffusé qui aboutit à la formation d'un halo circulaire autour de l'image de la source. Le rayon du halo est au plus égal à deux fois la distance entre la photocathode et la matrice de pixels. Toutes les images des objets contenus dans ce halo disparaissent. Avec des distances entre la photocathode et la matrice de pixels usuellement de l'ordre du millimètre, le halo peut couvrir une grande partie de la surface du capteur et celui-ci perd toute fonctionnalité.

Un deuxième type d'effet parasite est l'effet dit « de retour ionique sur la photocathode ». Un atome résiduel présent dans l'enceinte sous vide peut être ionisé par les électrons primaires, avant d'être lui-même accéléré vers la photocathode. Il s'ensuit un arrachement localisé de nombreux électrons de la photocathode, eux-mêmes accélérés en direction de la matrice de pixels. Cette forte densité d'électrons se traduit par un point intense sur l'image résultante.

Un troisième type d'effet parasite est l'effet dit de « comptage noir ». Cet effet résulte du bruit de fond d'émission électronique provenant de l'émission d'électrons par la photocathode sous l'effet thermo-ionique ou par effet de champs. Pour des images de scènes à bas niveau de lumière, le bruit de fond électronique est responsable d'un effet de neige aléatoire sur les scènes reconstruites.

Pour tenter de réduire le phénomène de rebond des électrons et par suite le phénomène de halo, la demande de brevet US 2005/0122021 propose que la surface de collecte des électrons présente une structure texturée. Outre le problème de fabrication d'une telle surface, cette solution supprime une partie de la surface sensible de collecte tout en ne permettant pas de diminuer les effets parasites sur une image enregistrée.

Un objet de l'invention est de permettre la détection ou la reconnaissance de photons dans des scènes à bas niveaux de lumière malgré la présence d'effets parasites.

Un autre objet de l'invention est de proposer un procédé de traitement des données produites par un capteur adapté au traitement des scènes à bas niveaux de lumière qui permet de détecter les électrons dits primaires résultant de la conversion de photons.

A cette fin, le procédé selon l'invention exploite les données produites par un capteur du type comprenant une enceinte sous vide, une photocathode disposée dans l'enceinte, conçue pour convertir des photons émis par au moins une source lumineuse en électrons primaires et soumise à un champ électromagnétique adapté pour accélérer les électrons primaires, un convertisseur d'électrons en charges secondaires, disposé dans l'enceinte face à la photocathode et adapté pour convertir au moins une partie de l'énergie des électrons primaires accélérés en charges secondaires collectées par une pluralité de cellules de détection réparties selon un pas régulier, le convertisseur convertissant également des électrons dits parasites ne provenant pas directement de la conversion d'un photon et pouvant être du type rétrodiffusé, du type résultant d'un retour ionique ou du type provenant du bruit de fond d'émission électronique, et un circuit d'acquisition adapté pour lire les charges collectées par les cellules de détection avec un temps d'intégration permettant d'obtenir une densité d'impact par unité de temps et par unité de surface de cellule de l'ordre de l'électron unique.

Selon l'invention, le procédé comporte les étapes suivantes :
- identifier un amas de cellules de détection contiguës dont au moins une cellule, dite principale, comporte une quantité de charges collectées supérieure à une valeur de seuil,
- déterminer au moins une caractéristique de l'amas,
- comparer la ou les caractéristique(s) déterminée(s) de l'amas à au moins une caractéristique d'un amas résultant de la conversion d'un électron primaire, afin de mettre en évidence un amas résultant de la conversion d'un électron primaire.

Selon une variante de réalisation, le procédé comporte en outre une étape de suppression d'un amas identifié comme ne résultant pas de la conversion d'un électron primaire.

Selon une variante avantageuse de réalisation, le procédé comporte en outre une étape de confrontation entre la ou les caractéristique(s) déterminée(s) de l'amas, d'une part, et au moins une caractéristique d'un amas résultant de la conversion d'un électron rétrodiffusé, d'autre part, afin d'identifier un amas résultant de la conversion d'un électron rétrodiffusé, et une étape de suppression des amas mis en évidence lors de l'étape de confrontation.

Cette variante permet avantageusement de supprimer les effets de halo dû aux électrons rétrodiffusés, dans la détection d'une scène à bas niveau de lumière comportant une source plus intense localisée.

Selon une variante avantageuse de réalisation, le procédé comporte une étape de recherche de similitude entre la ou les caractéristique(s) déterminée(s) de l'amas, d'une part, et au moins une caractéristique d'un amas résultant d'un retour ionique, d'autre part, afin d'identifier un amas résultant d'un retour ionique, et une étape de suppression des amas mis en évidence lors de l'étape de confrontation.

Cette variante permet avantageusement de supprimer les effets de retour ionique sur la photocathode.

Selon une variante avantageuse de réalisation, le procédé comporte par ailleurs les étapes suivantes :
- déterminer la position du photon à l'origine de chaque amas identifié et non supprimé,
- stocker au moins une partie de l'ensemble des positions déterminées,
- comparer chaque nouvelle position déterminée aux positions stockées,
- identifier à partir du résultat de la comparaison les nouvelles positions qui ne figurent pas dans les positions stockées, afin de mettre en évidence les positions d'électrons résultant du bruit de fond électronique,
- supprimer les nouvelles positions mises en évidence par l'étape d'identification.

Cette variante permet avantageusement de supprimer les effets du bruit de fond d'émission électronique provenant de l'émission d'électrons par la photocathode sous l'effet thermo-ionique ou par effet de champs.

Le procédé selon l'invention peut en outre comporter au moins l'une des caractéristiques suivantes :
- l'étape d'identification de l'amas comprend une étape de mise en évidence d'au moins la cellule principale dont la quantité de charges collectées est supérieure à une valeur de seuil et une étape de reconnaissance de l'amas à partir des charges collectées dans les cellules adjacentes à la cellule de détection principale.
- le procédé comprend une étape de génération d'un signal vidéo à partir des amas identifiés et non supprimés.
- le procédé comprend une étape de génération d'un signal de position à partir des positions déterminées et non supprimées.

Un autre objet de l'invention est de proposer un dispositif de détection de photons dans des scènes à bas niveaux de lumière malgré la présence d'effets parasites.

A cette fin, un dispositif de détection de photons selon l'invention comprend un capteur comportant une enceinte sous vide, une photocathode disposée dans l'enceinte sous vide, conçue pour convertir les photons en électrons primaires et soumise à un champ électromagnétique adapté pour accélérer les électrons primaires, un convertisseur d'électrons en charges secondaires, disposé dans l'enceinte sous vide face à la photocathode et adapté pour convertir au moins une partie de l'énergie des électrons primaires accélérés en charges secondaires collectées par une pluralité de cellules de détection réparties selon un pas régulier, le convertisseur convertissant également des électrons dits parasites ne provenant pas directement de la conversion d'un photon et pouvant être du type rétrodiffusé, du type résultant d'un retour ionique ou du type provenant du bruit de fond d'émission électronique, et un circuit d'acquisition adapté pour lire les charges collectées par les cellules de détection avec un temps d'intégration permettant d'obtenir une densité d'impact par unité de temps et par unité de surface de cellule de l'ordre de l'électron unique.

Selon l'invention, le dispositif de détection comprend également un système d'identification d'un amas de cellules de détection contiguës dont au moins une cellule, dite principale, comporte une quantité de charges collectées supérieure à une valeur de seuil, un système de détermination d'au moins une caractéristique de l'amas, un système de mémorisation d'au moins une caractéristique d'un amas résultant de la conversion d'un électron primaire, ainsi qu'un système de comparaison entre la ou les caractéristique(s) de l'amas et la ou les caractéristique(s) mémorisée(s) d'un amas résultant de la conversion d'un électron primaire, afin de mettre en évidence un amas résultant de la conversion d'un électron primaire.

Selon une variante de réalisation, le dispositif de détection comporte un système de suppression d'un amas identifié par le système de comparaison, comme ne résultant pas de la conversion d'un électron primaire.

Selon une variante avantageuse de réalisation, le système de mémorisation mémorise au moins une caractéristique d'un amas résultant de la conversion d'un électron rétrodiffusé, et le dispositif comporte un système de confrontation entre la ou les caractéristique(s) déterminée(s) de l'amas, d'une part, et la ou les caractéristique(s) mémorisée(s) d'un amas résultant de la conversion d'un électron rétrodiffusé, d'autre part, afin de mettre en évidence un amas résultant de la conversion d'un électron rétrodiffusé, et le dispositif comporte un système de suppression d'un amas mis en évidence par le système de confrontation.

Cette variante permet avantageusement d'empêcher la formation d'un effet de halo dans une scène à bas niveau de lumière comportant une source plus intense localisée.

Selon une variante avantageuse de réalisation, le système de mémorisation mémorise au moins une caractéristique d'un amas résultant d'un retour ionique, et le dispositif comporte un système de confrontation entre la ou les caractéristique(s) déterminée(s) de l'amas, d'une part, et la ou les caractéristique(s) mémorisée(s) d'un amas résultant d'un retour ionique, d'autre part, afin de mettre en évidence un amas résultant d'un retour ionique, et le dispositif comporte un système de suppression d'un amas mis en évidence par le système de confrontation.

Cette variante permet avantageusement de supprimer les effets de retour ionique sur la photocathode.

Selon une variante avantageuse de réalisation, le dispositif comporte en outre un système de détermination de la position du photon à l'origine de chaque amas identifié et non supprimé, un système de stockage d'au moins une partie de l'ensemble des positions déterminées, un système de comparaison entre chaque nouvelle position déterminée et les positions stockées, un système d'identification à partir du résultat de la comparaison des nouvelles positions qui ne figurent pas dans les positions stockées, afin de mettre en évidence les nouvelles positions d'électrons résultant du bruit de fond d'émission électronique par effet thermoionique ou par effet de champs, ainsi qu'un système de suppression des positions mises en évidence par le système d'identification.

Cette variante permet avantageusement de supprimer les effets du bruit de fond d'émission électronique provenant de l'émission d'électrons par la photocathode sous l'effet thermo-ionique ou par effet de champs.

Le dispositif selon l'invention peut en outre comporter au moins l'une des caractéristiques suivantes :
- le système d'identification de l'amas comporte un système d'identification d'au moins une cellule principale dont la quantité de charges collectées est supérieure à une valeur de seuil et un système de reconnaissance de l'amas à partir des charges collectées dans les cellules adjacentes à la cellule de détection principale,
- le dispositif comprend un système de génération d'un signal vidéo à partir des amas identifiés et non supprimés pendant un intervalle de temps donné.
- le dispositif comprend un système de génération d'un signal de position à partir de chaque position déterminée et non supprimée.

Diverses autres caractéristiques ressortent de la description faite ci-dessous en référence aux dessins annexés qui montrent, à titre d'exemples non limitatifs, des formes de réalisation de l'objet de l'invention.
La Figure 1 est un schéma représentant un exemple de réalisation d'un dispositif selon l'invention.
La **Figure 2** représente un exemple d'un amas résultant de la conversion d'un électron primaire, ainsi que les quantités de charges collectées dans les cellules de l'amas.
La **Figure 3** est un schéma explicitant l'effet de halo.
La **Figure 4A** est une image obtenue par un capteur de type EBCMOS usuel et comportant un effet de halo.
La **Figure 4B** est une image similaire à l'image de la **Fig.4A** mais obtenue par un dispositif selon l'invention.
La **Figure 5** est un logigramme du procédé selon l'invention.

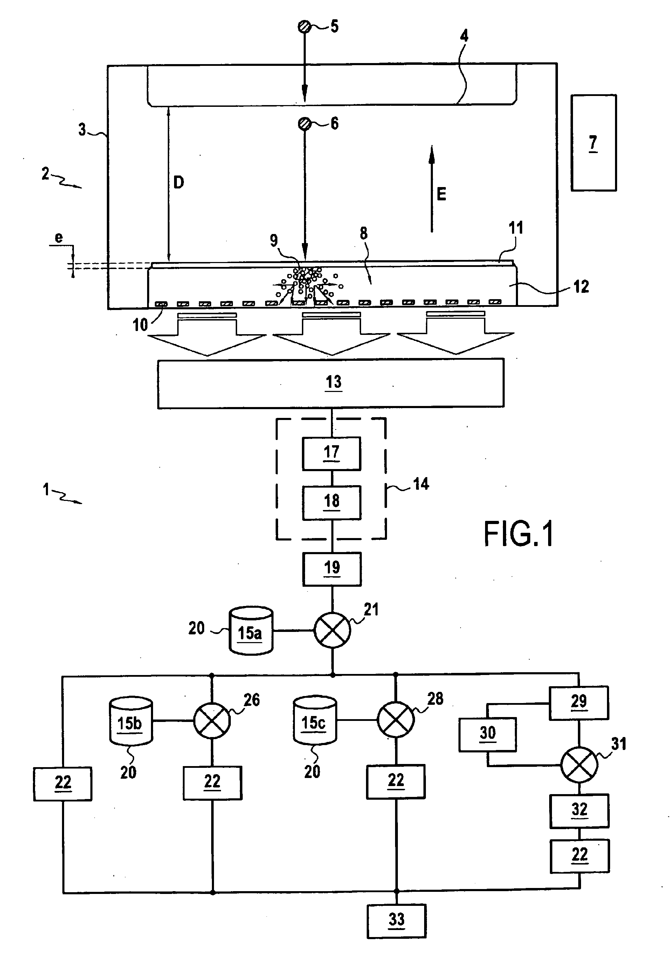

Le dispositif de détection de photons 1 représenté sur la **Figure 1** est adapté pour les scènes à bas niveaux de lumière. Ce dispositif de détection **1** comporte un capteur **2,** doté par construction d'une sensibilité de détection au photon unique. Dans le mode préféré de réalisation illustré, ce capteur **2** est de type EBCMOS. Bien entendu, l'invention ne se limite pas aux dispositifs munis d'un capteur de ce type. Tout capteur silicium susceptible d'être sensible au photo-électron unique, comme par exemple les pixels hybrides ou les CMOS type SOI (Silicon on Insulator), peut être employé dans le cadre de l'invention.

Le dispositif **1** comporte une enceinte **3** considérée sous vide, ainsi qu'une photocathode **4** disposée dans l'enceinte **3.** La photocathode **4** est adaptée pour convertir des photons **5,** émis par au moins une source de lumière non représentée, en électrons. L'ensemble des photons émis par la ou les source(s) et convertis au moins en partie par le dispositif définit un flux incident. Dans la présente description, les électrons résultant de la conversion d'un photon **5** par la photocathode **4** sont appelés électrons primaires **6.**

Les photons **5** peuvent par exemple provenir du spectre visible et/ou du proche infra-rouge et/ou du proche ultra-violet.

La photocathode **4** est soumise à un champ électromagnétique **E** induit par une différence de potentiel et créé à l'aide d'un système **7** de génération du champ électromagnétique **E.** Ledit champ électromagnétique **E** est adapté pour accélérer les électrons primaires **6** depuis la photocathode **4** jusqu'à un convertisseur d'électrons **8,** de sorte à générer des impacts d'électrons primaires **6** sur le convertisseur d'électrons. La photocathode **4** est distante d'une distance d'éloignement **D** du convertisseur d'électrons **8.**

La valeur du champ électromagnétique **E** est adaptée pour conférer suffisamment d'énergie cinétique aux électrons primaires **6** pour permettre la détection individuelle de chaque électron primaire 6 par le capteur **2.**

Le convertisseur d'électrons **8** est adapté pour convertir au moins une partie de l'énergie des électrons primaires **6** accélérés en charges secondaires **9,** collectées par une pluralité de cellules de détection **10** réparties selon un pas régulier par exemple matriciellement.

Dans l'exemple de réalisation illustré, le convertisseur d'électron **8** comporte une couche d'entrée **11** dite passive, munie d'une épaisseur **e,** disposée face à la photocathode **4** et traversée par au moins une partie des électrons primaires **6.** Le convertisseur d'électrons **8** comporte également un volume de détection **12** contigu à la couche d'entrée **11,** dans lequel au moins les électrons primaires **6** interagissent pour créer des paires électrons-trous qui diffusent jusqu'aux cellules de détection **10,** préférentiellement des diodes réparties matriciellement.

De manière préférentielle, le convertisseur d'électron **8** est un composant CMOS, pour « Complementary Metal-Oxide Semiconductor » et de type MAPS pour «Monolythic Active Pixel Sensor ». Bien entendu, d'autres types de convertisseurs d'électrons primaires **8** peuvent être utilisés dans le cadre de l'invention, comme par exemple un convertisseur d'électron muni d'une couche sensible connectée par billes ou par TSV, pour Through Silicon Via en anglais, à un circuit CMOS de lecture.

Le dispositif **1** comporte en outre un circuit d'acquisition **13** adapté pour lire les charges **9** collectées par les cellules de détection **10,** avec un temps d'intégration adapté pour obtenir une densité d'impact sur le convertisseur d'électron **8** par unité de temps et par unité de surface de cellule **10** de l'ordre de l'électron unique. Le temps d'intégration est de préférence inférieur ou égal à 1ms.

Selon une variante avantageuse de réalisation, le temps d'intégration est calculé, de manière dynamique ou non, par un système de calcul du temps d'intégration non représenté, en fonction de la taille des cellules de détection **10** et du flux lumineux incident.

Le circuit d'acquisition **13** est adapté pour offrir un rapport entre les charges **9** lues et un bruit de lecture généré lors de la lecture des cellules de détection **10** adapté pour permettre une sensibilité de détection au photon **5** unique. Le rapport entre les charges **9** lues et le bruit de lecture dépend au moins de la valeur du champ électromagnétique **E**, de l'épaisseur de la couche passive **e** du convertisseur d'électrons **8** ainsi que de la distance d'éloignement **D** entre la photocathode **4** et le convertisseur d'électrons **8.**

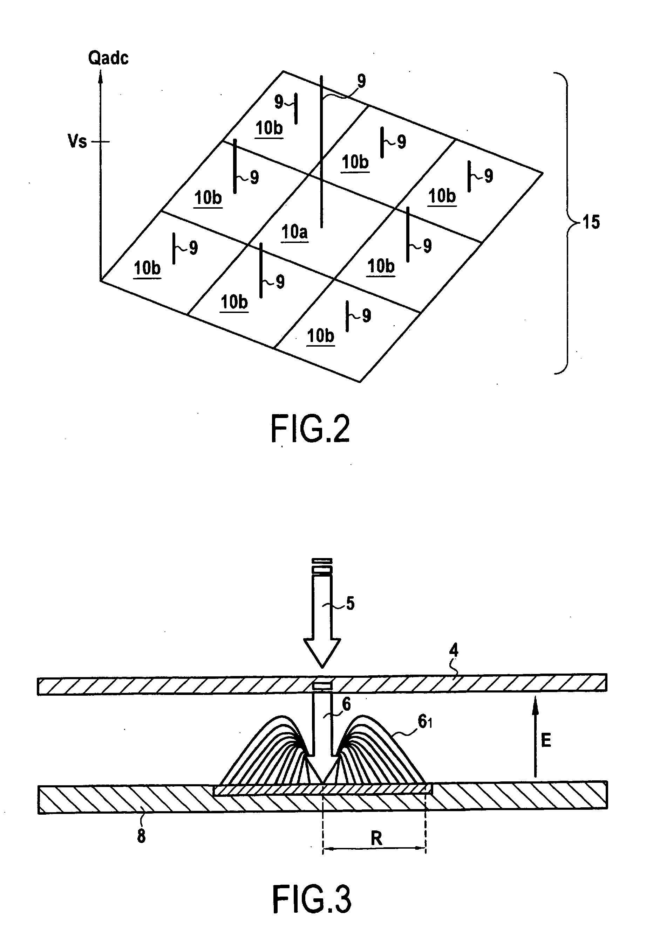

Selon l'invention, le dispositif **1** comprend en outre un système d'identification **14** d'un amas **15,** dont un exemple est représenté sur la **Fig. 2****.** En l'occurrence, la **Fig.2** représente un amas **15** résultant de la conversion d'un électron primaire.

Le système d'identification **14** identifie un amas **15** de cellules de détection **10** contiguës dont au moins une cellule dite principale **10a** comporte une quantité de charges **9** collectées supérieure à une valeur de seuil **Vs,** à partir des charges **9** lues par le circuit d'acquisition **13.**

De manière préférentielle, la valeur de seuil **Vs** retenue dépend de la valeur du bruit de lecture de la cellule de détection **10.** La valeur de seuil **Vs** est préférentiellement égale à 5 fois la valeur du bruit de lecture.

Selon le mode préféré de réalisation illustré, le système d'identification **14** comporte un système de mise en évidence **17** d'au moins la cellule principale **10a** dont la quantité de charges **9** collectées est supérieure à la valeur de seuil **Vs.** Le système d'identification **17** comporte en outre un système de reconnaissance **18** de l'amas **15** à partir des quantités de charges **9** collectées dans les cellules adjacentes **10b** à la cellule principale **10a.**

La taille optimale de l'amas **15,** c'est-à-dire le nombre de cellules **10** adjacentes prises en comptes, est variable et dépend de la distribution des charges **9** autour de la cellule principale **10a** et du pitch des cellules de détection **10.** De manière préférentielle, l'amas **15** a une taille de 3x3, de 5x5 ou de 7x7 cellules de détection **10.** Dans l'exemple de réalisation illustré, la taille de l'amas **15** est de 3x3 cellules de détection **10.**

La taille optimale de l'amas **15** peut avantageusement être calculée, de manière dynamique ou non, par un système de détermination de la taille optimale de l'amas non représenté.

De manière avantageuse, le système d'identification **14** d'un amas **15** permet d'identifier des zones pouvant potentiellement correspondre à un impact d'électron primaire **6** sur le convertisseur d'électron **8** en vue de les analyser.

Le dispositif **1** comporte en outre un système de détermination **19** d'au moins une caractéristique de l'amas **15.**

De manière préférentielle, le système de détermination **19** détermine la quantité de charges **9** totale collectée dans l'amas **15,** par la sommation des charges **9** collectées dans les cellules principales **10a,** et adjacentes **10b** de l'amas **15.**

Selon différentes variantes de réalisation, le système de détermination **19** peut déterminer d'autres caractéristiques de l'amas **15,** comme par exemple sa topologie ou sa densité de charges **9** moyenne.

Par exemple, les cellules **10a, 10b** dont la quantité de charges **9** collectée est la plus importante peuvent former un motif en croix ou en carré, suivant que l'impact de l'électron à l'origine de l'amas **15** se situe respectivement au dessus d'une seule cellule **10a**, **10b** ou entre 4 cellules **10a**, **10b.**

Le dispositif **1** comporte en outre un système dé mémorisation **20** d'au moins une caractéristique d'un amas de référence **15a** résultant de la conversion d'un électron primaire **6.** Les caractéristiques de l'amas de référence **15a** sont connues en soi, et le choix de la ou des caractéristique(s) retenue(s) est purement arbitraire et dépend du mode de réalisation du dispositif **1.**

De manière préférentielle, le système de mémorisation **20** mémorise la quantité de charges 9 totale de l'amas de référence **15a,** qui est comprise entre 220 et 280 Qadc et préférentiellement égale à 250 Qadc, pour un bruit moyen par cellule de 3 Qadc.

Selon une variante de réalisation, le système de mémorisation **20** mémorise la densité de charges **9** moyenne de l'amas de référence **15a,** qui est comprise entre 24 et 30 et préférentiellement égale à 27 Qadc/cellule sur une matrice de 3x3 cellules **10** avec un pitch de 17 µm.

Le dispositif **1** comporte par ailleurs un système de comparaison **21** entre la ou les caractéristique(s) déterminée(s) de l'amas **15,** d'une part, et la ou les caractéristique(s) mémorisée(s) de l'amas de référence **15a,** d'autre part, afin de mettre en évidence si l'amas **15** résulte de la conversion d'un électron primaire **6.** En d'autres termes, on compare l'amas **15** à l'amas de référence **15a** qui possède un profil connu de sorte à déterminer si ces amas **15, 15a** sont similaires.

De manière préférentielle, le système de comparaison **21** compare la quantité de charges **9** totale collectée dans l'amas **15** à la quantité de charges **9** totale de l'amas de référence **15a.**

Le dispositif **1** selon l'invention permet ainsi d'identifier de manière simple et sûre les électrons primaires résultant de la conversion de photons.

Le dispositif **1** permet de générer une image et/ou un signal vidéo constitué d'une succession d'images, chaque image étant générée à partir de la somme des charges **9** collectées par les cellules de détection **10** pendant le temps d'intégration du capteur **2.**

Toutefois, il doit être noté que le convertisseur d'électron **8** convertit également en charges secondaires **9,** et de manière non souhaitée, des électrons dits parasites ne provenant pas de la conversion d'un photon **5.** Les électrons parasites peuvent être au moins du type rétrodiffusé, du type résultant d'un retour ionique ou du type provenant du bruit de fond d'émission électronique. Chaque type d'électron parasite génère un type d'effet parasite distinct. Les électrons parasites de type rétrodiffusé génèrent un effet parasite de halo, les électrons parasites de type résultant d'un retour ionique génèrent un effet parasite dit de « retour ionique » et les électrons parasites du type provenant du bruit de fond d'émission électronique par la photocathode génèrent un effet parasite dit de « comptage noir ».

Aussi, il est avantageux d'identifier et de préférence de supprimer les amas **15** résultants de la conversion des électrons parasites afin de ne conserver que les amas **15** résultants de la conversion des électrons primaires **6,** afin de générer une image et/ou un signal vidéo sans effets parasites.

Selon une variante de réalisation, tout amas **15** dont les caractéristique(s) déterminée(s) présentent au moins une différence par rapport à la ou les caractéristique(s) mémorisée(s) de l'amas de référence **15a** est considéré comme un amas résultant de la conversion d'un électron parasite et par conséquent supprimé. Le dispositif **1** comporte, selon cette variante de réalisation, un système de suppression **22** relié en sortie du système de comparaison **21** et adapté pour supprimer les amas **15** identifiés par le système de comparaison **21** comme ne résultant pas de la conversion d'un électron primaire.

Selon une variante avantageuse de réalisation, le dispositif **1** permet d'identifier au moins un et de préférence les trois types d'électrons parasites définis ci-dessus afin, par exemple, de les éliminer.

Comme explicité sur la **Figure 3****,** l'effet de halo est dû à des électrons rétrodiffusés **6₁** par le convertisseur d'électrons **8,** c'est-à-dire diffusés par le convertisseur d'électron en direction de la photocathode **4.** Entre 12% et 18% des électrons primaires **6** sont rétrodiffusés par le convertisseur d'électrons **8,** accélérés par le champ électromagnétique **E** en direction de la photocathode **4** puis détectés à une position différente de la position de l'électron primaire **6** initiale. Il est possible de montrer, par exemple au moyen de simulations réalisées par la méthode Monte-Carlo ou au moyen de calculs analytiques, que la distance **R** parcourue par un électron rétrodiffusé entre l'impact primaire et l'impact secondaire est au plus égale à deux fois la distance entre la photocathode **4** et le convertisseur d'électrons **8.**

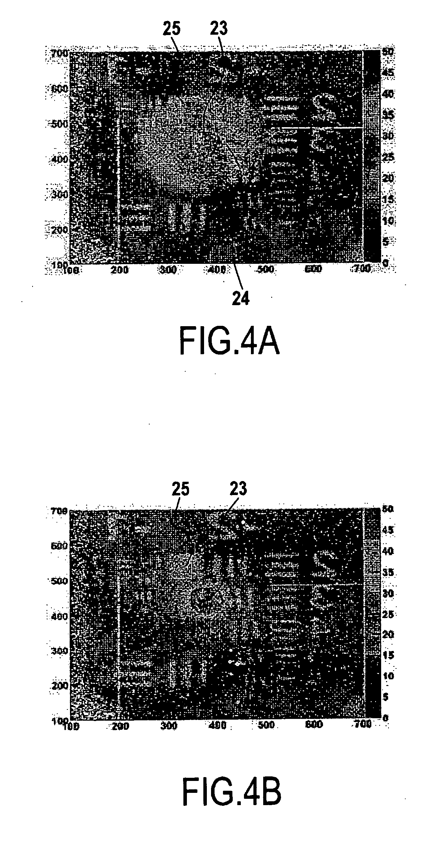

La **Figure 4A****,** représente une image d'une scène à bas niveau de lumière, c'est-à-dire inférieure au mLux, et contenant une source plus intense localisée constituée d'une fibre optique **23.** Cette image provient d'un capteur **2** EBCMOS usuel selon l'état de la technique. L'accumulation de charges **9** dues aux électrons rétrodiffusés **6₁** aboutit à la formation d'un halo **24** circulaire autour de la source plus intense. Toutes les images des objets contenus dans le halo **24,** par exemple un objet **25,** sont atténuées et/ou masquées par le halo **24.**

Selon un mode de réalisation de l'invention avantageusement adapté pour supprimer l'effet de halo, le système de mémorisation **20** mémorise au moins une caractéristique d'un amas étalon **15b** résultant de la conversion d'un électron rétrodiffusé **6₁**.

Les caractéristiques de l'amas étalon **15b** sont connues en soi, et le choix de la ou des caractéristique(s) retenue(s) est purement arbitraire et dépend du mode de réalisation du dispositif **1**.

De manière préférentielle, le système de mémorisation **20** mémorise la quantité de charges **9** totale de l'amas étalon **15b**, qui est comprise entre 75 et 125 Qadc et préférentiellement égale à 125 Qadc.

Selon cette variante, le dispositif **1** comporte également un système de confrontation **26** entre la ou les caractéristique(s) déterminée(s) de l'amas **15,** d'une part, et la ou les caractéristique(s) mémorisée(s) de l'amas étalon **15b,** d'autre part, afin de mettre en évidence si l'amas **15** résulte de la conversion d'un électron rétrodiffusé **6₁**. En d'autres termes, on compare l'amas **15** à l'amas étalon **15b** qui possède un profil connu, de sorte à déterminer si ces amas **15, 15b** sont similaires.

De manière préférentielle, le système de confrontation 26 confronte la quantité de charges **9** totale collectée dans l'amas **15** à la quantité de charges **9** totale de l'amas étalon **15b**. Selon cette variante, le dispositif **1** comporte de préférence un système de suppression **22** de l'amas **15** correspondant à un électron rétrodiffusé **6₁** et mis en évidence par le système de confrontation **26.**

La **Figure 4B** représente une image similaire à l'image de la **Fig.4A****,** mais obtenue par un dispositif **1** selon l'invention adapté pour supprimer les effets de halo. Les images des objets proches de la source lumineuse **23,** par exemple l'objet **25,** ne sont pas masquées.

L'effet de retour ionique sur la photocathode **4** est dû à l'ionisation par les électrons primaires **6** d'un atome résiduel présent dans l'enceinte **3.** Une fois ionisé positivement, l'atome résiduel est accéléré par le champ électromagnétique **E** en direction de la photocathode **4.** Il s'ensuit un arrachement localisé de nombreux électrons de la photocathode **4,** ces électrons arrachés étant eux-mêmes accélérés en direction du convertisseur d'électrons **8.**

Selon un mode de réalisation de l'invention avantageusement adapté pour supprimer l'effet de retour ionique, le système de mémorisation **20** mémorise au moins une caractéristique d'un amas modèle **15c** résultant d'un retour ionique. Les caractéristiques de l'amas modèle **15c** sont connues en soi, et le choix de la ou des caractéristique(s) retenue(s) est purement arbitraire et dépend du mode de réalisation du dispositif **1.** De manière préférentielle, le système de mémorisation **20** mémorise la quantité de charges **9** totale de l'amas modèle **15c,** qui est comprise entre 1000 et 4 000 Qadc et préférentiellement égale à 2 000 Qadc. Selon une variante de réalisation, le système de mémorisation **20** mémorise la densité de charges **9** moyenne de l'amas modèle **15c,** qui est comprise entre 40 et 60 Qadc/cellule et préférentiellement égale à 50 Qadc/cellule sur une matrice de 7x7 cellules **10** avec un pitch de 17 µm.

Selon cette variante, le dispositif **1** comporte en outre un système de recherche de similitude **28** entre la ou les caractéristique(s) déterminée(s) de l'amas **15,** d'une part, et la ou les caractéristique(s) mémorisée(s) de l'amas modèle **15c,** d'autre part, afin de mettre en évidence si l'amas **15** résulte d'un retour ionique. Autrement dit, le système de recherche de similitude **28** effectue une comparaison entre l'amas **15** et l'amas modèle **15c** qui possède un profil connu, de sorte à déterminer si ces amas **15, 15c** sont similaires. De manière préférentielle, le système de recherche de similitude **28** confronte la quantité de charges **9** totale collectée dans l'amas **15** à la quantité de charges **9** totale de l'amas modèle **15c.**

Le dispositif **1** comporte de préférence un système de suppression **22** d'un amas **15** considéré comme résultant d'un retour ionique et mis en évidence par le système de recherche de similitude **28.**

L'effet de bruit de fond d'émission électronique, quant à lui, est dû aux électrons émis spontanément et aléatoirement par la photocathode **4** par effet thermo-ionique ou par effet de champ. Pour des images de scènes à bas niveau de lumière, ce type d'effet se traduit par un effet de « neige » aléatoire sur l'image. Avantageusement, il est possible de détecter les électrons de type provenant du bruit de fond d'émission électronique en déterminant s'ils ont une localisation aléatoire.

A cette fin, le dispositif **1** comprend, selon une variante de l'invention adaptée pour supprimer les effets du bruit de fond d'émission électronique, un système de détermination **29** de la position du photon **5** à l'origine de chaque amas **15** identifié et non supprimé. Selon cette variante, le dispositif **1** comprend en outre un système de stockage **30** d'au moins une partie de l'ensemble des positions déterminées, et un système de comparaison **31** entre chaque nouvelle position déterminée et les positions stockées. Le système de détermination **29** et le système de stockage **30** sont ainsi reliés au système de comparaison **31.**

Le dispositif **1** comprend de préférence un système d'identification **32** à partir du résultat de la comparaison des nouvelles positions qui ne figurent pas dans les positions stockées, afin de mettre en évidence les positions de photons résultant du bruit de fond d'émission électronique.

En d'autres termes, le système d'identification **32** détermine si chaque nouvelle position est déjà présente dans les positions stockées, auquel cas la nouvelle position correspond probablement à un photon **5** émis par une des sources lumineuses, ou si elle n'est pas présente dans les positions stockées, auquel cas elle correspond probablement à la conversion d'un électron de type provenant du bruit de fond d'émission électronique par le convertisseur d'électron **8.**

Le dispositif **1** comprend également de préférence un système de suppression **22** des positions mises en évidence par le système d'identification **32.**

Bien entendu, les positions supprimées par le système de suppression **32** peuvent être stockées par le système de stockage **30** afin d'être comparées aux positions ultérieures. Avantageusement, cette caractéristique permet de ne pas supprimer les photons d'une source lumineuse qui apparaît.

Il est à noter que le mode de réalisation adapté pour supprimer l'effet de halo, le mode de réalisation adapté pour supprimer l'effet de retour ionique et le mode de réalisation adapté pour supprimer l'effet du bruit d'émission électronique ne sont pas incompatibles. Un dispositif **1** selon l'invention peut mettre en oeuvre l'un et/ou l'autre de ces modes de réalisation en combinaison, et de préférence les trois.

Enfin, le dispositif **1** comprend un système de génération **33** d'un signal de sortie. Selon une variante de l'invention, ce signal est un signal vidéo composé d'une pluralité d'images, et le système de génération **33** d'un signal de sortie comporte un système de génération d'un signal vidéo à partir des amas identifiés et non supprimés pendant un intervalle de temps donné, par exemple 40ms de manière à obtenir une fréquence d'image de 25Hz.

Selon une variante de l'invention, ce signal est un signal numérique donnant les positions des photons détectés. Dans ce cas, le système de génération **33** d'un signal se compose d'un système de génération d'un signal de position à partir de chaque position déterminée et non supprimée.

De manière avantageuse, cette variante permet de reconstituer ultérieurement et à volonté une image par un système de traitement externe non représenté à partir des positions successives des photons.

Selon une variante de réalisation, il est à noter qu'à partir du signal de position, il peut être envisagé de déterminer la position d'un émetteur ponctuel de photons uniques par image et de suivre éventuellement la position de cet émetteur ponctuel.

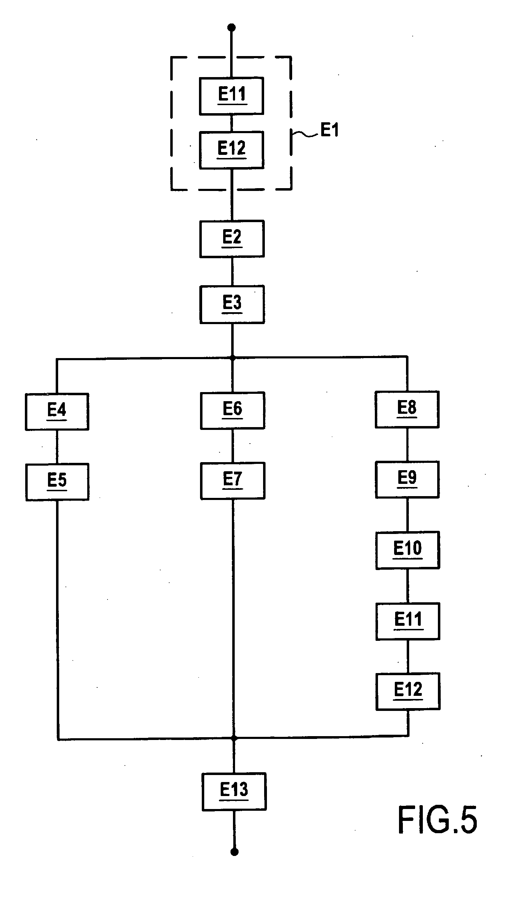

Le procédé selon l'invention, dont le logigramme est représenté sur la **Fig. 5****,** traite des données produites par un capteur 2 sensible par construction au photon unique, dans le but d'identifier des électrons primaires provenant de la conversion de photons pour permettre éventuellement de s'affranchir d'au moins un type d'effet parasite dans le traitement des scènes à bas niveaux de lumière.

Ces effets parasites peuvent être de plusieurs types, incluant l'effet parasite de halo, l'effet parasite dit de « retour ionique » et l'effet parasite dit de « comptage noir ».

Dans cet exemple de réalisation et de manière préférentielle, le procédé selon l'invention est conçu pour être mis en oeuvre sur le dispositif 1 selon l'invention et/ou pour traiter des données en provenance d'un capteur **2** selon l'invention. Bien entendu, il est possible de mettre en oeuvre ledit procédé sur un dispositif non-conforme à l'objet de l'invention.

Le procédé comporte une première étape **E1** d'identification d'un amas **15** de cellules de détection **10** contiguës dont au moins une cellule dite principale **10a** comporte une quantité de charges **9** collectée supérieure à une valeur de seuil **Vs** déterminée. Dans l'exemple de réalisation illustré, l'identification de l'amas **15** est réalisée au moyen du système d'indentification **14.**

Selon une variante de réalisation, l'étape **E1** comporte une première sous étape d'identification **E11** d'au moins la cellule principale **10a** dont la quantité de charges **9** collectée est supérieure à la valeur de seuil **Vs,** et une deuxième sous-étape **E12** de reconnaissance de l'amas **15** à partir des quantités de charges **9** collectées dans les cellules adjacentes **10b** à la cellule principale **10a.** Dans l'exemple de réalisation illustré, l'identification de la cellule principale **10a** est réalisée au moyen du système de mise en évidence **17,** et la reconnaissance de l'amas **15** est réalisée par le système de reconnaissance **18.**

Ensuite, le procédé détermine dans une deuxième étape **E2** au moins une caractéristique de l'amas **15.** Dans l'exemple de réalisation illustré, la détermination s'effectue au moyen du système de détermination **19.** De manière préférentielle, la deuxième étape **E2** détermine la quantité de charges **9** totale collectée dans l'amas **15,** par la sommation des charges **9** collectées dans les différentes cellules 10a, **10b** de l'amas **15.**

Le procédé compare alors dans une troisième étape **E3** la ou les caractéristique(s) déterminée(s) de l'amas **15,** d'une part, à au moins une caractéristique d'un amas de référence **15a** résultant de la conversion d'un électron primaire **6,** d'autre part, afin de mettre en évidence si l'amas **15** résulte de la conversion d'un électron primaire **6.** Autrement dit, le procédés compare l'amas **15** à l'amas de référence **15a** qui possède un profil connu, de sorte à déterminer si ces amas **15, 15a** sont similaires.

Les caractéristiques de l'amas de référence **15a** sont connues en soi, et le choix de la ou des caractéristique(s) retenue(s) est purement arbitraire et dépend du mode de réalisation du procédé selon l'invention. Dans l'exemple de réalisation illustré, la comparaison s'effectue au moyen du système de comparaison **21.** De manière préférentielle, la troisième étape **E3** compare la quantité de charges **9** totale collectée dans l'amas **15** à la quantité de charges **9** totale de l'amas de référence **15a**.

De manière préférentielle, au moins la première, la deuxième et la troisième étape sont répétées successivement et en continu.

Le procédé selon l'invention permet ainsi de détecter les photons par l'identification des amas résultant de la conversion d'électrons primaires.

Selon une variante de réalisation non représentée, il est à noter que le procédé peut mettre en oeuvre une étape de suppression des amas identifiés comme ne résultant pas de la conversion d'électrons primaires.

Selon une variante avantageusement adaptée pour supprimer les effets de halo, le procédé comporte une quatrième étape **E4** de confrontation entre la ou les caractéristique(s) déterminée(s) de l'amas **15,** d'une part, et au moins une caractéristique d'un amas étalon **15b** résultant de la conversion d'un électron rétrodiffusé **6₁,** d'autre part, afin d'identifier si l'amas **15** résulte de la conversion d'un électron rétrodiffusé **6₁**. De ce fait, le procédé compare l'amas **15** à l'amas étalon **15b** qui possède un profil connu, de sorte à déterminer si ces amas **15, 15b** sont similaires.

Les caractéristiques de l'amas étalon **15b** sont connues en soi, et le choix de la ou des caractéristique(s) retenue(s) est purement arbitraire et dépend du mode de réalisation du procédé selon l'invention.

De manière préférentielle, la quatrième étape **E4** compare la quantité de charges **9** totale collectée dans l'amas **15** à la quantité de charges **9** totale de l'amas étalon **15b.** Dans cet exemple, la confrontation s'effectue au moyen du système de confrontation **26.** Selon cette variante, le procédé comporte en outre une cinquième étape **E5** de suppression des amas **15** mis en évidence lors de la quatrième étape **E4.** Dans l'exemple de réalisation, la suppression s'effectue au moyen du système de suppression **22.**

Selon une variante avantageusement adaptée pour supprimer les effets de retour ionique, le procédé comporte en outre une sixième étape **E6** de confrontation entre la ou les caractéristique(s) déterminée(s) de l'amas **15,** d'une part, et au moins une caractéristique d'un amas modèle **15c** résultant d'un retour ionique, d'autre part, afin d'identifier si l'amas **15** résulte d'un retour ionique. De ce fait, le procédé compare l'amas **15** à l'amas modèle **15c** qui possède un profil connu, de sorte à déterminer si ces amas **15, 15c** sont similaires.

Les caractéristiques de l'amas modèle **15c** sont connues en soi, et le choix de la ou des caractéristique(s) retenue(s) est purement arbitraire et dépend du mode de réalisation du procédé selon l'invention. De manière préférentielle, la sixième étape **E6** compare la quantité de charges **9** totale collectée dans l'amas **15** à la quantité de charges **9** totale de l'amas modèle **15c**. Dans l'exemple de réalisation illustré, la confrontation s'effectue au moyen du système de recherche de similitude **28.**

Selon cette variante, le procédé comporte en outre une septième étape **E7** de suppression des amas **15** mis en évidence lors de la sixième étape **E6.** Dans l'exemple de réalisation illustré, la suppression s'effectue au moyen du système de suppression **22.**

Selon une variante avantageusement adaptée pour supprimer les effets du bruit d'émission électronique, le procédé comporte en outre une huitième étape **E8** de détermination de la position du photon **5** à l'origine de chaque amas **15** identifié et non supprimé. Dans l'exemple illustré, la détermination de la position du photon **5** s'effectue au moyen du système de détermination **29** de la position du photon **5.**

Le procédé comporte en outre une neuvième étape **E9** de stockage d'au moins une partie de l'ensemble des positions déterminées, réalisée dans cet exemple au moyen du système de stockage **30** du dispositif **1.** Selon cette variante, chaque nouvelle position déterminée est comparée aux positions stockées lors d'une dixième étape **E10,** et les nouvelles positions qui ne figurent pas dans les positions stockées sont identifiées à partir du résultat de la comparaison dans une onzième étape **E11** afin de mettre en évidence les positions résultant du bruit de fond d'émission électronique.

Dans l'exemple de réalisation illustré, la comparaison est effectuée au moyen du système de comparaison **21** du dispositif **1** et l'identification des nouvelles positions est effectuée par le système d'identification **32.** Par ailleurs, cette variante de réalisation comporte une douzième étape E12 de suppression des nouvelles positions mises en évidence lors de la onzième étape **E11**. Dans cet exemple de réalisation, la suppression est réalisée au moyen du système de suppression **22.**

Bien entendu, les positions supprimées peuvent être néanmoins stockées pour être comparées ultérieurement aux nouvelles positions, afin de pouvoir identifier l'apparition d'une nouvelle source lumineuse dont il ne faut plus supprimer les photons **5.**

Il est à noter que la variante du procédé adaptée pour supprimer les effets de halo, la variante du procédé adaptée pour supprimer les effets de retour ionique et la variante du procédé adaptée pour supprimer les effets du bruit d'émission électronique ne sont pas incompatibles. Un procédé selon l'invention peut mettre en oeuvre l'une et/ou l'autre de ces variantes, et de préférence les trois.

Enfin, le procédé selon l'invention comporte une treizième étape **E13** de génération d'un signal de sortie.

Selon une variante de l'invention, ce signal est un signal vidéo composé d'une pluralité d'images et la treizième étape **E13** consiste à générer un signal vidéo à partir des amas **15** identifiés et non supprimés pendant un intervalle de temps donné, par exemple 40ms de manière à obtenir une fréquence d'image de 25Hz.

Selon une autre variante de l'invention, ce signal est un signal numérique donnant les positions des photons **5** détectés et la treizième étape **E13** consiste à générer un signal de position à partir de chaque position déterminée et non supprimée. A partir de cette étape de génération d'un signal de sortie, le procédé selon l'invention peut selon une variante de réalisation, déterminer la position d'un émetteur ponctuel de photons uniques par image. Le procédé peut être adapté pour suivre la position de cet émetteur ponctuel.

## Revendications

1. Dispositif (**1**) de détection de photons (**5**) comportant un capteur (**2**) comprenant :
- une enceinte sous vide (**3**),
- une photocathode (**4**) disposée dans l'enceinte (**3**) sous vide, conçue pour convertir les photons (**5**) en électrons primaires (**6**) et soumise à un champ électromagnétique (**E**) adapté pour accélérer les électrons primaires (**6**),
- un convertisseur (**8**) d'électrons (**6**) en charges secondaires (**9**), disposé dans l'enceinte sous vide (**3**) face à la photocathode(**4**) et adapté pour convertir au moins une partie de l'énergie des électrons primaires (**6**) accélérés en charges secondaires (**9**) collectées par une pluralité de cellules de détection (**10**) selon un pas régulier, le convertisseur (**8**) convertissant éventuellement en charges secondaires (**9**) des électrons dits parasites ne provenant pas directement de la conversion d'un photon (**5**) et pouvant être du type rétrodiffusé, du type résultant d'un retour ionique ou du type provenant du bruit de fond d'émission électronique,
- un circuit d'acquisition (**13**) adapté pour lire les charges (**9**) collectées par les cellules de détection (**10**) avec un temps d'intégration permettant d'obtenir une densité d'impact par unité de temps et par unité de surface de cellule (**10**) de l'ordre de l'électron unique,
ledit dispositif de détection (**1**) étant **caractérisé en ce qu'**il comprend :
- un système d'identification (**14**) d'un amas (**15**) de cellules de détection (**10**) contiguës dont au moins une cellule, dite principale (**10a**), comporte une quantité de charges (**9**) collectées supérieure à une valeur de seuil **Vs,**
- un système de détermination (**19**) d'au moins une caractéristique de l'amas (**15**),
- un système de mémorisation (**20**) d'au moins une caractéristique d'un amas de référence (**15a**) résultant de la conversion d'un électron primaire (**6**),
- un système de comparaison (**21**) entre la ou les caractéristique(s) déterminée(s) de l'amas (**15**), d'une part, et la ou les caractéristique(s) mémorisée(s) de l'amas de référence **(15a)** afin de mettre en évidence si l'amas (**15**) résulte de la conversion d'un électron primaire (**6**).

2. Dispositif selon la revendication 1, **caractérisé en ce que** le système d'identification (**14**) comporte :
- un système de mise en évidence (**17**) d'au moins la cellule principale (**10a**) dont la quantité de charges (**9**) collectées est supérieure à la valeur de seuil **Vs,**
- un système de reconnaissance (**18**) de l'amas (**15**) à partir des charges (**9**) collectées dans les cellules adjacentes (**10b**) à la cellule principale (**10a**).

3. Dispositif selon la revendication 1 ou 2, **caractérisé en ce qu'**il comporte un système de suppression (**22**) d'un amas (**15**) identifié par le système de comparaison (**21**), comme ne résultant pas de la conversion d'un électron primaire.

4. Dispositif selon l'une des revendications 1 à 3, **caractérisé en ce que** :
- le système de mémorisation (**20**) mémorise au moins une caractéristique d'un amas étalon (**15b**) résultant de la conversion d'un électron rétrodiffusé (**6₁**)**,**
- le dispositif (**1**) comporte un système de confrontation (**26**) entre la ou les caractéristique(s) déterminée(s) de l'amas (**15**), d'une part, et la ou les caractéristique(s) mémorisée(s) de l'amas étalon **(15b),** d'autre part, afin de mettre en évidence si l'amas (**15**) résulte de la conversion d'un électron rétrodiffusé (**6₁**)**,**
- le dispositif (**1**) comporte un système de suppression (**22**) d'un amas (**15**) mis en évidence par le système de confrontation (**26**).

5. Dispositif selon l'une des revendications 1 à 4, **caractérisé en ce que** :
- le système de mémorisation (**20**) mémorise au moins une caractéristique d'un amas modèle (**15c**) résultant d'un retour ionique,
- le dispositif (**1**) comporte un système de recherche de similitude (**28**) entre la ou les caractéristique(s) déterminée(s) de l'amas (**15**), d'une part, et la ou les caractéristique(s) mémorisée(s) de l'amas modèle (**15c**), d'autre part, afin de mettre en évidence si l'amas (**15**) résulte d'un retour ionique,
- le dispositif (**1**) comporte un système de suppression (22) d'un amas (**15**) mis en évidence par le système de recherche de similitude (**28**).

6. Dispositif selon l'une des revendications 1 à 5, **caractérisé en ce que** le dispositif (**1**) comprend en outre un système de génération d'un signal (**33**) vidéo à partir des amas (**15**) identifiés et non supprimés pendant un intervalle de temps donné.

7. Dispositif selon l'une des revendications 1 à 6, **caractérisé en ce que** le dispositif (**1**) comprend en outre :
- un système de détermination (**29**) de la position du photon (**5**) à l'origine de chaque amas (**15**) identifié et non supprimé,
- un système de stockage (**30**) d'au moins une partie de l'ensemble des positions déterminées,
- un système de comparaison (**31**) entre chaque nouvelle position déterminée et les positions stockées,
- un système d'identification (**32**) à partir du résultat de la comparaison des nouvelles positions qui ne figurent pas dans les positions stockées, afin de mettre en évidence les positions d'électrons résultant du bruit de fond d'émission électronique par effet thermo-ionique ou par effet de champs,
- un système de suppression (**22**) des positions mises en évidence par le système d'identification (**32**).

8. Dispositif selon la revendication 7, **caractérisé en ce que** le dispositif (**1**) comprend en outre un système de génération d'un signal (**33**) de position à partir de chaque position déterminée et non supprimée.

9. Procédé de traitement de données produites par un capteur (**2**) du type incluant :
- une enceinte (**3**) sous vide,
- une photocathode (**4**) disposée dans l'enceinte (**3**), conçue pour convertir des photons (**5**) émis par au moins une source lumineuse en électrons primaires (**6**) et soumise à un champ électromagnétique (**E**) adapté pour accélérer les électrons primaires (**5**),
- un convertisseur (**8**) d'électrons (**6**) en charges secondaires (**9**), disposé dans l'enceinte (**3**) face à la photocathode (**4**) et adapté pour convertir au moins une partie de l'énergie des électrons primaires (**6**) accélérés en charges secondaires (**9**) collectées par une pluralité de cellules de détection (**10**) réparties selon un pas régulier, le convertisseur (**8**) convertissant éventuellement en charges secondaires (**9**) des électrons dits parasites ne provenant pas directement de la conversion d'un photon (**5**) et pouvant être du type rétrodiffusé, du type résultant d'un retour ionique ou du type provenant du bruit de fond d'émission électronique,
- un circuit d'acquisition **(13)** adapté pour lire les charges (**9**) collectées par les cellules de détection (**10**) avec un temps d'intégration permettant d'obtenir une densité d'impact par unité de temps et par unité de surface de cellule (**10**) de l'ordre de l'électron unique,
**caractérisé en ce qu'**il comporte les étapes suivantes répétées successivement et en continu :
- identifier un amas (**15**) de cellules de détection (**10**) contiguës dont au moins une cellule, dite principale **(10a),** comporte une quantité de charges (**9**) collectées supérieure à une valeur de seuil **Vs**,
- déterminer au moins une caractéristique de l'amas (**15**),
- comparer la ou les caractéristique(s) déterminée(s) de l'amas (**15**) à au moins une caractéristique d'un amas de référence **(15a)** résultant de la conversion d'un électron primaire (**6**), afin de mettre en évidence si l'amas (**15**) résulte de la conversion d'un électron primaire (**6**).

10. Procédé de traitement selon la revendication 9, **caractérisé en ce que** l'étape d'identification de l'amas (**15**) comprend les étapes suivantes :
- identifier au moins la cellule principale **(10a)** dont la quantité de charges (**9**) collectées est supérieure à la valeur de seuil **Vs,**
- reconnaître l'amas (**15**) à partir de la quantité de charges (**9**) collectées dans les cellules adjacentes (**10b**) à la cellule de détection principale (**10a**).

11. Procédé de traitement selon la revendication 9 ou 10, **caractérisé en ce que** le procédé comporte une étape de suppression d'un amas (**15**) identifié comme ne résultant pas de la conversion d'un électron primaire (**6**).

12. Procédé de traitement selon l'une des revendications 9 à 11, **caractérisé en ce que** le procédé comporte :
- une étape de confrontation entre la ou les caractéristique(s) déterminée(s) de l'amas (**15**)**,** d'une part, et au moins une caractéristique d'un amas étalon (**15b**) résultant de la conversion d'un électron rétrodiffusé (**6a**) , d'autre part, afin d'identifier si l'amas (**15**) résulte de la conversion de l'électron rétrodiffusé **(6a),**
- une étape de suppression des amas (**15**) mis en évidence lors de l'étape de confrontation.

13. Procédé de traitement selon l'une des revendications 9 à 12, **caractérisé en ce que** le procédé comporte :
- une étape de confrontation entre la ou les caractéristique(s) déterminée(s) de l'amas (**15**) , d'une part, et au moins une caractéristique d'un amas modèle (**15c**) résultant d'un retour ionique, d'autre part, afin d'identifier si l'amas (**15**) résulte d'un retour ionique,
- une étape de suppression des amas (**15**) mis en évidence lors de l'étape de confrontation.

14. Procédé de traitement selon l'une des revendications 9 à 13, **caractérisé en ce qu'**il comprend en outre une étape de génération d'un signal vidéo à partir des amas (**15**) identifiés et non supprimés.

15. Procédé de traitement selon l'une des revendications 9 à 13, **caractérisé en ce qu'**il comprend en outre les étapes suivantes :
- déterminer la position du photon (**5**) à l'origine de chaque amas (**15**) identifié et non supprimé,
- stocker au moins une partie de l'ensemble des positions déterminées,
- comparer chaque nouvelle position déterminée aux positions stockées,
- identifier à partir du résultat de la comparaison les nouvelles positions qui ne figurent pas dans les positions stockées, afin de mettre en évidence les nouvelles positions résultant du bruit de fond électronique,
- supprimer les nouvelles positions mises en évidence par l'étape d'identification.

16. Procédé de traitement selon la revendication 15, **caractérisé en ce qu'**il comprend en outre une étape de génération d'un signal de position à partir des positions déterminées et non supprimées.

17. Procédé de traitement selon la revendication 16, **caractérisé en ce qu'**il consiste, à partir de l'étape de génération d'un signal de position, à déterminer la position d'un émetteur ponctuel de photons uniques par image et éventuellement à suivre la position de cet émetteur

## Claims

1. Device (**1**) for detecting photons (**5**), comprising a Sensor (**2**) including:
- a vacuum chamber (**3**),
- a photocathode (**4**) arranged in the vacuum chamber (**3**), designed to convert the photons (**5**) to primary electrons (**6**) and subjected to an electromagnetic field (**E**) adapted to accelerate the primary electrons (**6**),
- a converter (**8**) converting electrons (**6**) to secondary charges (**9**), arranged in the vacuum chamber (**3**) facing the photocathode (**4**) and adapted to convert at least part of the energy of the accelerated primary electrons (**6**) into secondary charges (**9**) collected by a plurality of detection cells (**10**) set at a regular pitch, the converter (**8**) optionally converting into secondary charges (**9**) so-called parasitic electrons not derived directly from the conversion of a photon (**5**) and possible bering of backscattered type, of the type resulting from ion back bombardment or of the type derived from electronic emission background noise,
- an acquisition circuit (**13**) adapted to read the charges (**9**) collected by the defection cells (**10**) with an integration time hallowing an impact density to be obtained per unit of time and per unit surface of a cell (**10**) of the order of a single electron,
said detection device (**1**) being **characterized in that** it comprise:
- an identification system (**14**) identifying a cluster (**15**) of adjacent detection cells (**10**) of which at least one so-called main cell (**10a**) comprises a quantity of collected charges (**9**) higher than a threshold value **Vs,**
- a determination system (**19**) determining at least one characteristic of the cluster (**15**),
- a memory system (**20**) memorizing at least one characteristic of a reference cluster (**15a**) resulting from the conversion of a primary electron (**6**),
- a comparison system (**21**) comparing the determined characteristic(s) of the cluster (**15**) with the memorized characteristic(s) of the reference cluster (**15a**) in order to evidence whether the cluster (**15**) results from the conversion of a primary electron (**6**).

2. The device according to claim 1, **characterized in that** the identification system (**14**) comprises:
- a system (**17**) for evidencing at least the main cell (**10a**) whose quantity of collected charges (**9**) is higher than the threshold value Vs,
- a recognition system (**18**) recognizing the cluster (**15**), from the charges (**9**) collected in the cells (**10b**) adjacent the main cell (**10a**).

3. The device according to claim 1 or 2, **characterized in that** it comprises an elimination system (**22**) to eliminate a cluster (**15**) identified by the comparison system (**21**) as not resulting from the conversion of a primary electron.

4. The device according to any of claims 1 to 3, **characterized in that**:
- the memory system (**20**) memorizes at least one characteristic of a standard cluster **(15b)** resulting from the conversion of a backscattered electron (**6₁**),
- the device (**1**) comprises a confrontation system (**26**) confronting the determined characteristic(s) of the cluster (**15**) with the memorized characteristic(s) of the standard cluster (**15b**), in order to evidence whether the cluster (**15**) results from the conversion of a backscattered electron (**6₁**);
- the device (**1**) comprises an elimination system (**22**) to eliminate a cluster (**15**) evidenced by the confrontation system (**26**).

5. The device according to any of claims 1 to 4, **characterized in that**:
- the memory system (**20**) memorizes at least one characteristic of a model cluster (**15c**) resulting from ion back bombardment,
- the device (**1**) comprises a similarity search system (**28**) between the determined characteristic(s) of the cluster (**15**) and the memorized characteristic(s) of the model cluster **(15c)** in order to evidence whether the cluster (**15**) results from ion back bombardment,
- the device (**1**) comprises an elimination system (**22**) to eliminate a cluster (**15**) evidenced by the similarity search system (**28**).

6. The device according to any of claims 1 to 5, **characterized in that** the device (**1**) further comprises a system for generating a video signal (**33**) from clusters (**15**) identified and non-eliminated over a give time interval.

7. The device according to any of claims 1 to 6, **characterized in that** the device (**1**) further comprises:
- a determination system (**29**) determining the position of the photon (**5**) at the origin of the each identified and non-eliminated cluster (**15**),
- a storage system (**30**) storing at least part of all the determined positions,
- a comparaison system (**31**) comparing each new determined position with the stored positions,
- an identification system (**32**) using the result of The comparaison of the new positions which are not included in the stored positions, in order to evidence the positions of electrons resulting from electronic emission background noise by thermionic effect or by field effect,
- an elimination system (**22**) eliminating positions evidenced by the identification system (**32**).

8. The device according to claim 7, **characterized in that** the device (**1**) further comprises a system for generating a position signal (**33**) from each determines, non-eliminated position.

9. A method for processing data produced by a sensor (**2**) of the type including:
- a vacuum chamber (**3**),
- a photocathode (**4**) arranged in the chamber (**3**), designed to convert photons (5) emitted by at least one light source into primary electrons (**6**) and subjected to an electromagnetic field (**E**) adapted to accelerate the primary electrons (**5**),
- a converter (**8**) converting electrons (**6**) into secondary charges (**9**), arranged in the chamber (**3**) facing the photocathode (**4**) and adapted to convert at least part of the energy of the accelerated primary electrons (**6**) into secondary charges (**9**) collected by a plurality of detection cells (**10**) distributed at a regular pitch, the converter (**8**) optionally converting to secondary charges (**9**) so-called parasitic electrons not derived directly from the conversion of a photon (**5**) and possibly being of backscattered type, of the type resulting from back bombardment or of the type derived from electronic emission background noise,
- an acquisition circuit (**13**) adapted to read the charges (**9**) collected by the detection cells (**10**) with an integration time allowing an impact density to be obtained per unit of time and per surface unit of a cell (**10**) of the order of a single electron, **characterized in that** it comprises the following steps repeated successively and continuously:
- identifying a cluster (**15**) of adjacent detection cells (**10**) of which at least one so-called main cell (**10a**) comprises a quantity of collected charges (**9**) higher than a threshold value **Vs,**
- determining at least one characteristic of the cluster (**15**),
- comparing the determined characteristic(s) of the cluster (**15**) with at least one characteristic of a reference cluster (**15a**) resulting from the conversion of a primary electron (**6**), in order to evidence whether the cluster (**15**) results from the conversion of a primary electron (**6**).

10. The processing method according to claim 9, **characterized in that** the identification step of the cluster (**15**) comprises the following steps:
- identifying at least the main cell (**10a**) whose quantity of collected charges (**9**) is higher than the threshold value **Vs**,
- recognizing the cluster (**15**) from the quantity of collected charges (**9**) in the cells (**10b**) adjacent the main detection cell (**10a**).

11. The processing method according to claim 9 or 10, **characterized in that** the method comprises a step to eliminate a cluster (**15**) identified as not resulting from the conversion of a primary electron (**6**).

12. The processing method according to any of claims 9 to 11, **characterized in that** the method comprises:
- a confrontation step between the determined characteristic (s) of the cluster (**15**) and at least one characteristic of a standard cluster (**15b**) resulting from the conversion of a backscattered electron (**6a**), in order to identify whether the cluster (**15**) results from the conversion of the backscattered electron (**6a**),
- a step to eliminate clusters (**15**) evidenced at the confrontation step.

13. The processing method according to any of claims 9 to 12, **characterized in that** the method comprises:
- a step confronting the determined characteristic(s) of the cluster (**15**) with at least one characteristic of a model cluster (**15c**) resulting from ion back bombardment, in order to identify whether the cluster (**15**) results from ion back bombardment,
- a step to eliminate clusters (**15**) evidenced at the confrontation step.

14. The processing method according to any of claims 9 to 13, **characterized in that** it further comprises a step to generate a video signal from clusters (**15**) identified and non-eliminated.

15. The processing method according to any of claims 9 to 13, **characterized in that** it further comprises the following steps:
- determining the position of the photon (**5**) at the origin of each cluster (**15**) identified and non-eliminated,
- storing at least part of all the determined positions,
- comparing each new determined position with the stored positions,
- identifying, from the result of comparison, those new positions which are not included in the stored positions, in order to evidence the new positions resulting from electronic background noise,
- eliminating the new positions evidenced at the identification step.

16. The processing method according to claim 15, **characterized in that** it further comprises a step for generating a position signal from the determined, non-eliminated positions.

17. The processing method according to claim 16, **characterized in that**, from the step for generating a position signal, it consists of determining the position of a single-photon point emitter per image and optionally of tracking she position of this emitter.

## Patentansprüche

1. Vorrichtung (1) zur Erfassung von Photonen (5), umfassend einen Sensor (2), umfassend:
- einen Vakuumraum (3),
- eine Photokathode (4), die in dem Vakuumraum (3) angeordnet und derart ausgeführt ist, dass sie die Photonen (5) in Primärelektronen (6) umwandelt, und die einem elektromagnetischen Feld (E) ausgesetzt ist, das dazu vorgesehen ist, die Primärelektronen (6) zu beschleunigen,
- einen Wandler (8) von Elektronen (6) in Sekundärladungen (9), der in dem Vakuumraum (3) gegenüber der Photokathode (4) angeordnet und dazu vorgesehen ist, mindestens einen Teil der Energie der beschleunigten Primärelektronen (6) in Sekundärladungen (9) umzuwandeln, die von einer Vielzahl von Erfassungszellen (10) in einem regelmäßigen Intervall gesammelt werden, wobei der Wandler (8) so genannte Parasitenelektronen, die nicht direkt von der Umwandlung eines Photons (5) stammen und rückgestreuten Typs sein können, des Typs, der von einer lonenrückkehr oder dem elektronischen Sendehintergrundgeräusch stammt, eventuell in Sekundärladungen (9) umwandelt,
- eine Erfassungsschaltung (13), die dazu ausgeführt ist, die von den Erfassungszellen (10) gesammelten Ladungen (9) mit einer Integrationszeit zu lesen, die es ermöglicht, eine Trefferdichte pro Zeiteinheit und pro Flächeneinheit einer Zelle (10) von ungefähr einem einzigen Elektron zu erzielen,
wobei die Erfassungsvorrichtung (1) **dadurch gekennzeichnet ist, dass** sie folgendes umfasst:
- ein Identifikationssystem (14) einer Anhäufung (15) von aneinander grenzenden Erfassungszellen (10), von denen mindestens eine Zelle, Hauptzelle (10a) genannt, eine Menge von gesammelten Ladungen (9) umfasst, die größer als ein Schwellenwert Vs ist,
- ein System (19) zur Bestimmung mindestens eines Merkmals der Anhäufung (15),
- ein System (20) zum Speichern mindestens eines Merkmals einer Referenzanhäufung (15a), die sich von der Umwandlung eines Primärelektrons (6) stammt,
- ein Vergleichssystem (21) zwischen dem oder den bestimmten Merkmal(en) der Anhäufung (15) einerseits und dem oder den gespeicherten Merkmal(en) der Referenzanhäufung (15a), um aufzuzeigen, ob die Anhäufung (15) von der Umwandlung eines Primärelektrons (6) stammt.

2. Vorrichtung nach Anspruch 1, **dadurch gekennzeichnet, dass** das Identifikationssystem (14) folgendes umfasst:
- ein System (17) zum Aufzeigen mindestens der Hauptzelle (10a), deren Menge an gesammelten Ladungen (9) größer als der Schwellenwert Vs ist,
- ein System (18) zum Erkennen der Anhäufung (15) aus den in den an die Hauptzelle (10a) grenzenden Zellen (10b) gesammelten Ladungen (9).

3. Vorrichtung nach Anspruch 1 oder 2, **dadurch gekennzeichnet, dass** sie ein System (22) zur Unterdrückung einer Anhäufung (15), die vom Vergleichssystem (21) identifiziert wurde, als nicht aus der Umwandlung eines Primärelektrons stammend umfasst.

4. Vorrichtung nach einem der Ansprüche 1 bis 3, **dadurch gekennzeichnet, dass**:
- das Speichersystem (20) mindestens ein Merkmal einer Normanhäufung (15b), die aus der Umwandlung eines rückgestreuten Elektrons (6₁) stammt, speichert,
- die Vorrichtung (1) ein Konfrontationssystem (26) zwischen dem oder den bestimmten Merkmal(en) der Anhäufung (15) einerseits und dem oder den gespeicherten Merkmal(en) der Normanhäufung (15b) andererseits umfasst, um aufzuzeigen, ob die Anhäufung (15) aus der Umwandlung eines rückgestreuten Elektrons (6₁) stammt,
- die Vorrichtung (1) ein System (22) zur Unterdrückung einer Anhäufung (15), die durch das Konfrontationssystem (26) aufgezeigt wurde, umfasst.

5. Vorrichtung nach einem der Ansprüche 1 bis 4, **dadurch gekennzeichnet, dass**:
- das Speichersystem (20) mindestens ein Merkmal einer Modellanhäufung (15c), die von einer lonenrückkehr stammt, speichert,
- die Vorrichtung (1) ein System (28) zur Suche einer Ähnlichkeit zwischen dem oder den bestimmten Merkmal(en) der Anhäufung (15) einerseits und dem oder den gespeicherten Merkmal(en) der Modellanhäufung (15c) andererseits umfasst, um aufzuzeigen, ob die Anhäufung (15) von einer lonenrückkehr stammt,
- die Vorrichtung (1) System (22) zur Unterdrückung einer Anhäufung (15), die vom Ähnlichkeitssuchsystem (28) aufgezeigt wurde, umfasst.

6. Vorrichtung nach einem der Ansprüche 1 bis 5, **dadurch gekennzeichnet, dass** die Vorrichtung (1) ferner ein System (33) zur Erzeugung eines Videosignals aus identifizierten und während eines gegebenen Zeitintervalls nicht unterdrückten Anhäufungen (15) umfasst.

7. Vorrichtung nach einem der Ansprüche 1 bis 6, **dadurch gekennzeichnet, dass** die Vorrichtung (1) ferner folgendes umfasst:
- ein System (29) zur Bestimmung der Position des Photons (5), das jeder identifizierten und nicht unterdrückten Anhäufung (15) zu Grunde liegt,
- ein System (30) zum Speichern mindestens eines Teils der Gesamtheit der bestimmten Positionen,
- ein Vergleichssystem (31) zwischen jeder neuen bestimmten Position und den gespeicherten Positionen,
- ein Identifikationssystem (32) auf Basis des Resultats des Vergleichs der neuen Positionen, die nicht in den gespeicherten Positionen aufscheinen, um die Positionen von Elektronen, die vom elektronischen Sendehintergrundgeräusch durch thermoionischen Effekt oder Feldeffekt stammen, aufzuzeigen,
- ein System (22) zur Unterdrückung der vom Identifikationssystem (32) aufgezeigten Positionen.

8. Vorrichtung nach Anspruch 7, **dadurch gekennzeichnet, dass** die Vorrichtung (1) ferner ein System (33) zur Erzeugung eines Positionssignals aus jeder bestimmten und nicht unterdrückten Position umfasst.

9. Verfahren zur Verarbeitung von Daten, die von einem Sensor (2) erzeugt werden, welcher folgendes umfasst:
- einen Vakuumraum (3),
- eine Photokathode (4), die in dem Vakuumraum (3) angeordnet und derart ausgeführt ist, dass sie die Photonen (5) in Primärelektronen (6) umwandelt, und die einem elektromagnetischen Feld (E) ausgesetzt ist, das dazu vorgesehen ist, die Primärelektronen (6) zu beschleunigen,
- einen Wandler (8) von Elektronen (6) in Sekundärladungen (9), der in dem Vakuumraum (3) gegenüber der Photokathode (4) angeordnet und dazu vorgesehen ist, mindestens einen Teil der Energie der beschleunigten Primärelektronen (6) in Sekundärladungen (9) umzuwandeln, die von einer Vielzahl von Erfassungszellen (10) in einem regelmäßigen Intervall gesammelt werden, wobei der Wandler (8) so genannte Parasitenelektronen, die nicht direkt von der Umwandlung eines Photons (5) stammen und rückgestreuten Typs sein können, des Typs, der von einer lonenrückkehr oder dem elektronischen Sendehintergrundgeräusch stammt, eventuell in Sekundärladungen (9) umwandelt,
- eine Erfassungsschaltung (13), die dazu ausgeführt ist, die von den Erfassungszellen (10) gesammelten Ladungen (9) mit einer Integrationszeit zu lesen, die es ermöglicht, eine Trefferdichte pro Zeiteinheit und pro Flächeneinheit einer Zelle (10) von ungefähr einem einzigen Elektron zu erzielen,
**dadurch gekennzeichnet, dass** es die folgenden nacheinander und kontinuierlich wiederholten Schritte umfasst:
- Identifikation einer Anhäufung (15) von aneinander grenzenden Erfassungszellen (10), von denen mindestens eine Zelle, Hauptzelle (10a) genannt, eine Menge von gesammelten Ladungen (9) umfasst, die größer als ein Schwellenwert Vs ist,
- zur Bestimmung mindestens eines Merkmals der Anhäufung (15),
- Vergleich zwischen dem oder den bestimmten Merkmal(en) der Anhäufung (15) einerseits und dem oder den gespeicherten Merkmal(en) der Referenzanhäufung (15a), um aufzuzeigen, ob die Anhäufung (15) von der Umwandlung eines Primärelektrons (6) stammt.

10. Verarbeitungsverfahren nach Anspruch 9, **dadurch gekennzeichnet, dass** der Schritt der Identifikation der Anhäufung (15) die folgenden Schritte umfasst:
- Identifikation mindestens der Hauptzelle (10a), deren Menge an gesammelten Ladungen (9) größer als der Schwellenwert Vs ist,
- Erkennen der Anhäufung (15) aus der Menge an gesammelten Ladungen (9) in den an die Haupterfassungszelle (10a) angrenzenden Zellen (10b).

11. Verarbeitungsverfahren nach Anspruch 9 oder 10, **dadurch gekennzeichnet, dass** das Verfahren einen Schritt der Unterdrückung einer Anhäufung (15), die als nicht aus der Umwandlung eines Primärelektrons (6) stammend identifiziert wurde, umfasst.

12. Verarbeitungsverfahren nach einem der Ansprüche 9 bis 11, **dadurch gekennzeichnet, dass** das Verfahren folgendes umfasst:
- einen Schritt der Konfrontation zwischen dem oder den bestimmten Merkmal(en) der Anhäufung (15) einerseits und mindestens einem Merkmal einer Normanhäufung (15b), die aus der Umwandlung eines rückgestreuten Elektrons (6a) stammt, andererseits, um zu identifizieren, ob die Anhäufung (15) aus der Umwandlung des rückgestreuten Elektrons (6a) stammt,
- einen Schritt der Unterdrückung der Anhäufungen (15), die im Konfrontationsschritt aufgezeigt wurden.

13. Verarbeitungsverfahren nach einem der Ansprüche 9 bis 12, **dadurch gekennzeichnet, dass** das Verfahren folgendes umfasst:
- einen Schritt der Konfrontation zwischen dem oder den bestimmten Merkmal(en) der Anhäufung (15) einerseits und mindestens einem Merkmal einer Modellanhäufung (15c), die von einer lonenrückkehr stammt, andererseits, um zu identifizieren, ob die Anhäufung (15) von einer lonenrückkehr stammt,
- einen Schritt der Unterdrückung der Anhäufungen (15), die während des Konfrontationsschrittes aufgezeigt wurden.

14. Verarbeitungsverfahren nach einem der Ansprüche 9 bis 13, **dadurch gekennzeichnet, dass** es ferner einen Schritt der Erzeugung eines Videosignals aus identifizierten und nicht unterdrückten Anhäufungen (15) umfasst.

15. Verarbeitungsverfahren nach einem der Ansprüche 9 bis 13, **dadurch gekennzeichnet, dass** es ferner die folgenden Schritte umfasst:
- Bestimmung der Position des Photons (5), das jeder identifizierten und nicht unterdrückten Anhäufung (15) zu Grunde liegt,
- Speichern mindestens eines Teils der Gesamtheit der bestimmten Positionen,
- Vergleich zwischen jeder neuen bestimmten Position und den gespeicherten Positionen,
- Identifikation auf Basis des Resultats des Vergleichs der neuen Positionen, die nicht in den gespeicherten Positionen aufscheinen, um die neuen Positionen von Elektronen, die vom elektronischen Sendehintergrundgeräusch stammen, aufzuzeigen,
- Unterdrückung der vom Identifikationssystem aufgezeigten neuen Positionen.

16. Verarbeitungsverfahren nach Anspruch 15, **dadurch gekennzeichnet, dass** es ferner einen Schritt der Erzeugung eines Positionssignals auf Basis der bestimmten und nicht unterdrückten Positionen umfasst.

17. Verarbeitungsverfahren nach Anspruch 16, **dadurch gekennzeichnet, dass** es darin besteht, ausgehend vom Schritt der Erzeugung eines Positionssignals die Position eines punktuellen Senders von Einzelphotonen pro Bild zu bestimmen und eventuell die Position dieses Senders zu verfolgen.
